(19) Europäisches Patentamt
European Patent Office
Office européen des brevets

(11) Veröffentlichungsnummer: **0 161 457**
**A2**

(12) **EUROPÄISCHE PATENTANMELDUNG**

(21) Anmeldenummer: **85103976.8**

(22) Anmeldetag: **02.04.85**

(51) Int. Cl.⁴: **C 09 B 23/08**

(30) Priorität: **13.04.84 DE 3413940**

(43) Veröffentlichungstag der Anmeldung: **21.11.85**
**Patentblatt 85/47**

(84) Benannte Vertragsstaaten: **BE CH DE FR GB IT LI NL SE**

(71) Anmelder: **BASF Aktiengesellschaft,**
**Carl-Bosch-Strasse 38, D-6700 Ludwigshafen (DE)**

(72) Erfinder: **Thomas, Michael, Dr., Am Wingertsberg 4,**
**D-6719 Weisenheim (DE)**
Erfinder: **Neumann, Peter, Dr.,**
**Franz-Schubert-Strasse 1, D-6908 Wiesloch (DE)**

(54) **Tetra(dialkylaminophenyl)cyanine, deren Herstellung und Verwendung.**

(57) Tetra-(dialkylaminophenyl)-cyanine der Formel

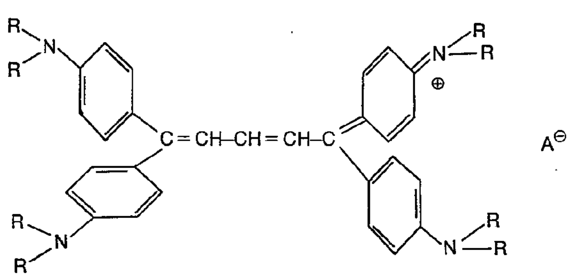

in der R für gleiches oder verschiedenes $C_1$- bis $C_6$-Alkyl und $X^\ominus$ für $HO^\ominus$ oder für ein Äquivalent eines Anions ausgenommen $ClO_4^\ominus$ stehen.

(II) mit $A^\ominus$ = $J^\ominus$ wird durch Kondensation der entsprechenden Diphenylethylene mit ortho-Ameisensäureestern in Carbonsäuren in Gegenwart von Trifluorsulfon- und/oder Trifluoressigsäure hergestellt und durch Fällen mit im Reaktionsmedium löslichen Jodiden in Gegenwart geringer Mengen Wasser erhalten.

Die Cyanine (II) sind in Materialien, die zur Herstellung von optischen Aufzeichnungsmedien dienen, gut löslich und zeigen keine oder nur geringe Neigung zu kristallisieren.

EP 0 161 457 A2

Tetra(dialkylaminophenyl)cyanine, deren Herstellung und Verwendung

Das Tetrabenzocyanin der Formel I

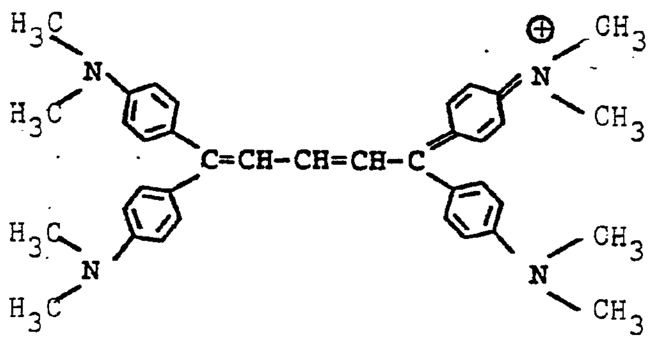

$ClO_4^{\ominus}$ (I)

und dessen Herstellung ist aus Helv. Chim. Acta 28, Seiten 604 und 611 (1945) und J. Amer. Chem. Soc., 80, 3772 (1958) bekannt.

Zur Herstellung von optischen Aufzeichnungsträgern nach dem Spin-coating-Verfahren oder durch Gießverfahren werden Farbstoffe benötigt, die in den verwendeten Bindemitteln leicht löslich sind und möglichst keine oder nur eine geringe Neigung zur Rekristallisation aufweisen.

Der Farbstoff der Formel I ist zur Herstellung eines optischen Aufzeichnungsmediums nach dem Spin-coating-Verfahren oder dem Gießverfahren nicht geeignet, da dieser bei der Synthese nur als schwerlösliches Perchlorat anfällt, das in der als Aufzeichnungsmedium dienenden Schicht auskristallisiert. Auch eine Beschichtung durch Aufdampfen des Farbstoffes (I) im Vakuum ist wegen der geringen Flüchtigkeit nicht möglich.

Aufgabe der vorliegenden Erfindung war es für die Herstellung von optischen Aufzeichnungsmedien nach dem Spin-coating-Verfahren oder dem Gießverfahren geeignete Farbstoffe bereitzustellen.

Es wurde nun gefunden, daß die Aufgabe durch die Tetra(dialkylaminophenyl)-cyanine der vorliegenden Erfindung gelöst wird.

Noe/Br

Dementsprechend betrifft die vorliegende Erfindung Tetra(dialkylaminophenyl)-cyanine der Formel

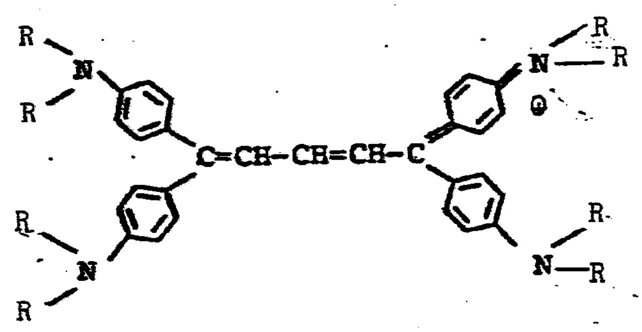

$A^{\ominus}$ (II),

in der R für gleiches oder verschiedenes $C_1$- bis $C_6$-Alkyl und $A^{\ominus}$ für $HO^{\ominus}$ oder für ein Äquivalent eines Anions ausgenommen $ClO_4^{\ominus}$ stehen.

Die Cyanine (II) gemäß der vorliegenden Erfindung sind in den Materialien, die zur Herstellung von optischen Aufzeichnungsmedien dienen, gut löslich und zeigen keine oder nur eine geringe Neigung zur Kristallisation.

In (II) kommt für R gleiche oder verschiedenes $C_1$- bis $C_6$-Alkyl in Betracht, z.B. Methyl, Ethyl, n- und i-Propyl, n- und i-Butyl, 2-Butyl, tert.Butyl, n-Pentyl, 3-Pentyl, 2-Methyl-butyl-(2), 2,2-Dimethylpropyl-(1), n-Hexyl und 3-Methylpentyl-(1). Vorzugsweise steht R für Methyl, Ethyl, n- und i-Propyl, n-Butyl, n-Pentyl und n-Hexyl.

Besonders bevorzugt sind Cyanine (II), in denen die 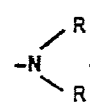 -Gruppen untereinander verschieden oder in denen in der 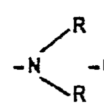 -Gruppe beide R verschieden sind,
z.B. (II), in dem 2 der Dialkylaminogruppen für $-N(CH_3)_2$ und die restlichen für $-N(C_2H_5)_2$ oder in dem

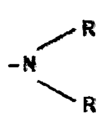 für 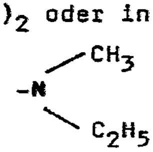 stehen.

Für $A^{\ominus}$ kommen - aus genommen $ClO_4^{\ominus}$ - z.B. im einzelnen in Betracht:

$OH^-$, $J^-$, $BF_4^-$, $PF_6^-$, $SbF_6^-$ o- und p-Toluolsulfonat, Benzolsulfonat, Naphthalin-2-sulfonat, Naphthalin-2-sulfonat, Xylolsulfonat, 1/2 $SO_4^{2-}$, Anionen von $C_1$- bis $C_8$-Alkansäuren (Alkanoate) wie Formiat, Propionat, Butyrat, Valeriat, Adipat, Octanoat und 2-Ethylhexanoat, Acetat, $CF_3COO^-$, $C_1$- bis $C_{18}$-Alkansulfonaten wie Methansulfonat, Ethan-, Propan-, Butan-, Hexan-, Octan-, Decan-, Dodecan-, Hexadecan- und Octadecansulfonat und Trifluormethylsulfonat.

Vorzugsweise steht $A^-$ für $OH^-$, $J^-$, $BF_4^-$, $PF_6^-$, p-Toluolsulfonat, Benzolsulfonat, $C_1$- bis $C_{18}$-Alkansulfonat oder $C_1$- bis $C_8$-Alkanoat.

Die Erfindung betrifft außerdem ein Verfahren zur Herstellung der Cyanine der Formel (II), in der R die oben angegebene Bedeutung hat und $X^-$ für $J^-$ steht, durch Kondensieren der entsprechenden 1,1-Bis-(4-dialkylamino-phenyl)-ethylene mit ortho-Ameisensäureestern in Gegenwart von starker Säure, wobei man die Kondensation erfindungsgemäß in Gegenwart von Trifluormethansulfonsäure, Trifluoressigsäure oder Gemischen davon als starker Säure durchführt und nach Beendigung der Umsetzung durch Zugeben von 0,1 bis 10, vorzugsweise 0,1 bis 5 Gew.-% Wasser, bezogen auf die Ethylenverbindung, und einem in dem Reaktionsgemisch löslichen Jodid das Cyanin als Jodid fällt und isoliert.

Als Reaktionsmedium dienen wie bei den Cyaninkondensationen des Standes der Technik Eisessig, Propionsäure oder Gemische davon. Das Verfahren wird in der Regel so durchgeführt, daß man in eine Lösung des Diphenylethylens oder eines Gemisches aus 2 oder mehr Diphenylethylenen und dem ortho-Ameisensäureester in der wasserfreien Carbonsäure die starke Säure z.B. Trifluoressigsäure zugibt.

Die Reaktion ist nach 1 bis 5 Stunden beendet. Dann werden dem Reaktionsgemisch das Wasser und das Jodid zugegeben, wobei das Cyanin (II) als Jodid ausfällt.

Als Jodide kommen alle in Betracht, die in dem Reaktionsgemisch löslich sind, wobei hier eine Löslichkeit von ca. 1 % für die Fällung ausreichend ist.

Im einzelnen sind als Jodide z.B. zu nennen:
Die Alkalimetalljodide wie Kalium-, Natrium- und Lithiumjodid; Calciumjodid, Ammoniumjodid, Jodide von quartären Ammoniumverbindungen wie Tetramethyl-, Tetraethyl-, Tetrabutyl-, Trimethylbenzylammoniumjodid.

Bevorzugt sind die Alkalimetalljodide.

Das isolierte Cyaninjodid kann in an sich bekannter Weise in die freie Base ($X^{\ominus}$ = $HO^{\ominus}$) und diese in Salze der Cyanine mit anderen Anionen überführt werden.

Die Überführung in die freie Base kann z.B. durch wäßrige Ammoniaklösung oder durch einen basischen Ionenaustauscher erfolgen.

Zur Herstellung von optischen Aufzeichnungsmedien werden (II) enthaltende Polymerlösungen hergestellt und diese auf Trägermaterialien in bekannter Weise aufgetragen. Die Schichtdicken sollten nach dem Trocknen um 1 µm liegen.

Die folgenden Beispiele sollen die Erfindung zusätzlich erläutern. Die im folgenden angegebenen Teile sind Gewichtsteile.

Beispiel 1

6 Teile Trifluoressigsäure werden bei 25°C zu einer Lösung von

13,3 Teilen 1,1-Bis-(4-dimethylaminophenyl)-ethylen
16,1 Teilen 1,1-Bis-(4-diethylaminophenyl)-ethylen und
8,1 Teilen o-Ameisensäuretriethylester in
100 Teilen Essigsäure getropft (Dauer: 1/4 h).

Nach 2 h gibt man zur Mischung

9,1 Teile pulverisiertes Kaliumjodid und anschließend
0,1 Teil Wasser hinzu und läßt weitere 2 h nachrühren.

Das Gemisch wird in 500 Teile Eiswasser gegossen, die Fällung abgesaugt, mit wenig Wasser gewaschen und getrocknet.

Ausbeute: 18,5 Teile Cyaninfarbstoff der Formel

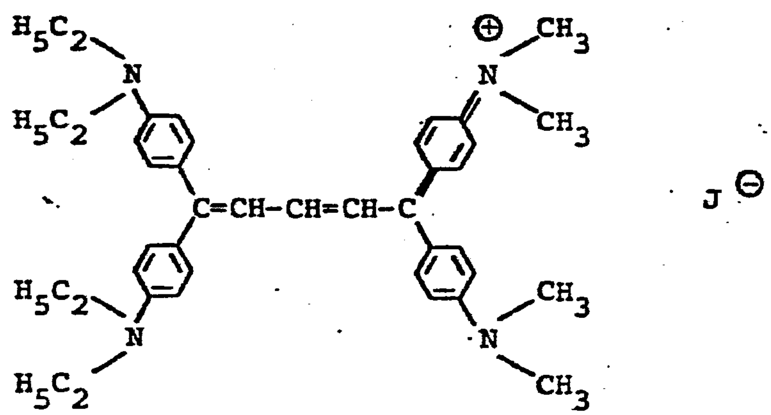

(III)

Schmelzbereich: 160 - 200°C.

Beispiel 2

Es werden 29,4 Teile 1,1-Bis-(4-N-methyl-N-ethyl-aminophenyl)ethylen angewendet und sonst wie in Beispiel 1 verfahren. Man erhält 18,5 Teile des Cyaninfarbstoffs der Formel

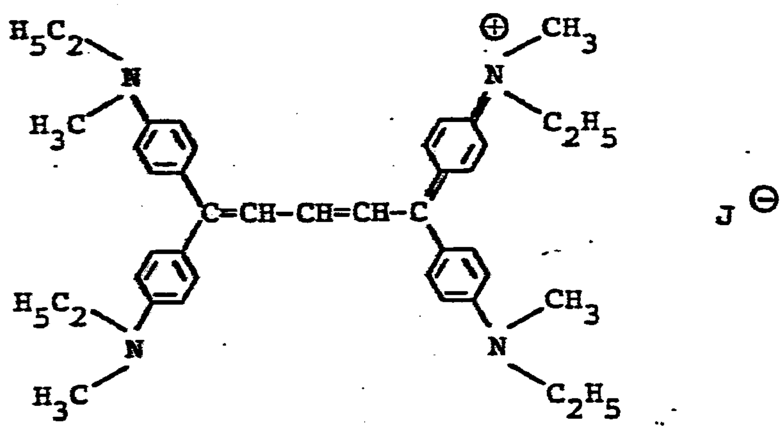

(IV)

Schmelzbereich: 160 - 200°C.

Beispiel 3

10 Teile des Farbstoffs aus Beispiel 1 werden in 100 Teilen Methanol bei 40°C mit 10 Teilen eines basischen Ionenaustauschers 30 min. gerührt. Der Austauscher wird abfiltriert, mit Methanol gewaschen und die vereinigten Filtrate eingeengt.

Ausbeute: 9 Teile Cyaninfarbstoff in Form des Hydroxids.

Anwendungsbeispiel

Eine 5 % methanolische Lösung aus gleichen Teilen des Farbstoffs aus Beispiel 1 und eines Polymeren auf der Basis Vinylacetat/Vinylpyrrolidon wird auf eine Glasplatte in einer Stärke von 20 µm (feucht) aufgetragen und getrocknet (Trockenschicht 1 µm). Die erhaltene Platte kann mit Hilfe eines Halbleiterlasers ($\lambda_{max}$ 860 nm) beschrieben und gelesen werden.

Patentansprüche

1. Tetra(dialkylaminophenyl)-cyanine der Formel

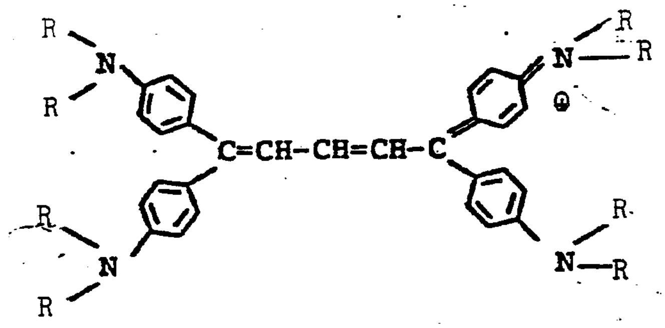

$A^{\ominus}$

in der R für gleiches oder verschiedenes $C_1$- bis $C_6$-Alkyl und $A^{\ominus}$ für $HO^{\ominus}$ oder für ein Äquivalent eines Anions ausgenommen $ClO_4^{\ominus}$ stehen.

2. Cyanine gemäß Anspruch 1, <u>dadurch gekennzeichnet</u>, daß, wenn R Methyl ist, mindestens ein R von Methyl verschieden ist oder, wenn R Ethyl ist, mindestens ein R von Ethyl verschieden ist.

3. Cyanine gemäß Anspruch 1 oder 2, <u>dadurch gekennzeichnet</u>, daß $A^{\ominus}$ für $HO^{\ominus}$, $J^{\ominus}$, $BF_4^{\ominus}$, $PF_6^{\ominus}$, p-Toluolsulfonat, Benzolsulfonat, $C_1$- bis $C_{18}$-Alkansulfonat oder $C_1$- bis $C_8$-Alkanoat steht.

4. Cyanine gemäß Anspruch 1 oder 2, <u>dadurch gekennzeichnet</u>, daß $A^{\ominus}$ für $J^{\ominus}$ steht.

5. Cyanine gemäß Anspruch 1, 2, 3 oder 4, <u>dadurch gekennzeichnet</u>, daß R für Methyl, Ethyl, n- oder i-Propyl, n-Butyl, n-Pentyl oder n-Hexyl stehen.

6. Cyanin gemäß Anspruch 1, <u>gekennzeichnet durch</u> die Formel

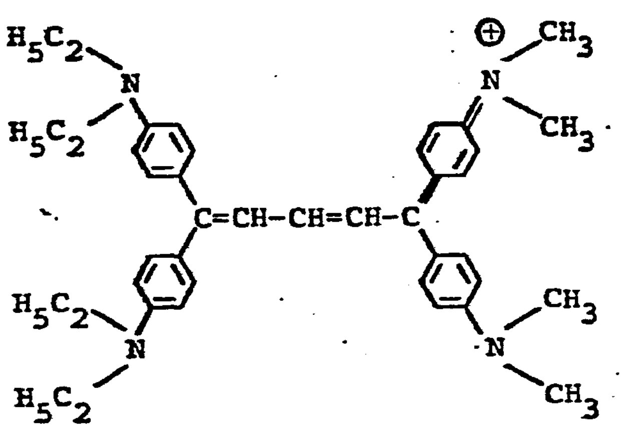

$J^{\ominus}$ (III)

7. Cyanin gemäß Anspruch 1, <u>gekennzeichnet durch</u> die Formel

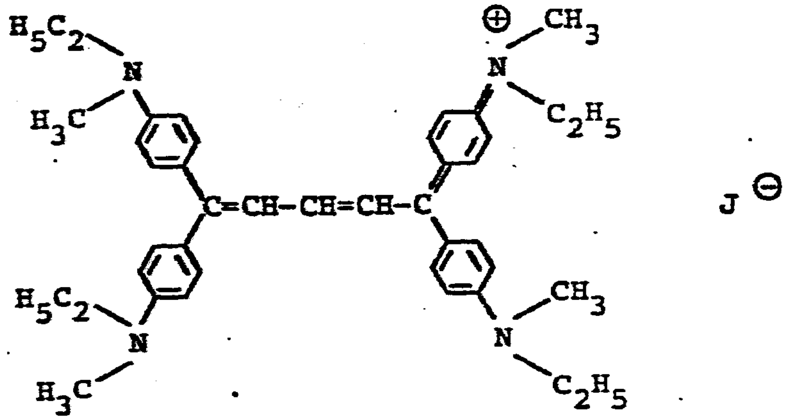

(IV)

8. Verwendung der Cyanine gemäß den Ansprüchen 1 bis 7 zur Herstellung von optischen Aufzeichnungsmedien.

9. Verfahren zur Herstellung von Cyaninen der Formel

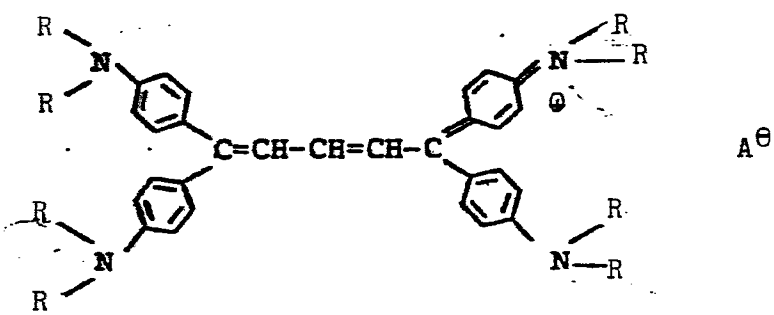

in der R für gleiches oder verschiedenes $C_1$- bis $C_6$-Alkyl und $A^{\ominus}$ für Jodid stehen, durch Kondensation der entsprechenden 1,1-Bis-(4'-dialkylaminophenyl)-ethylene mit ortho-Ameisensäureestern in Gegenwart von starker Säure, <u>dadurch gekennzeichnet</u>, daß man die Kondensation in Gegenwart von Trifluoressigsäure und/oder Trifluormethansulfonsäure als starker Säure durchführt und nach der Beendigung der Reaktion das Tetrabenzocyanin aus dem Reaktionsgemisch durch Zugeben von 0,1 bis 10 Gew.-%, bezogen auf die Ethylenverbindung, Wasser und einem in dem organischen Reaktionsgemisch löslichen Jodid als Jodid fällt und das Jodid isoliert.